# EUROPÄISCHE PATENTSCHRIFT

(11) **EP 3 000 000 B1**
(45) Veröffentlichungstag und Bekanntmachung des Hinweises auf die Patenterteilung: **17.05.2017**
(21) Anmeldenummer: 14735465.8
(22) Anmeldetag: 12.06.2014
(51) Int. Cl.: G05B 19/4093, G05B 19/4097

(54) **SYSTEM UND VERFAHREN ZUR ERKENNUNG VON UMFORMUNGEN**
SYSTEM AND METHOD FOR DETECTING SHAPING
SYSTÈME ET PROCÉDÉ DE RECONNAISSANCE DE DÉFORMATIONS

(30) Priorität: 24.06.2013 DE 102013211960
(43) Veröffentlichungstag der Anmeldung: 30.03.2016
(73) Patentinhaber: Trumpf Werkzeugmaschinen GmbH + Co. KG, 71254 Ditzingen (DE)
(72) Erfinder: KOEHLER, Uwe, 73240 Wendlingen (DE); BAIERL-MÖHLER, Monika, 71735 Nussdorf (DE)
(74) Vertreter: Prüfer & Partner mbB Patentanwälte · Rechtsanwälte
(86) Internationale Anmeldenummer: PCT/EP2014/001597
(87) Internationale Veröffentlichungsnummer: WO 2014/206532

(56) Entgegenhaltungen:
- US-A1- 2005 228 534
- US-A1- 2007 225 847
- CHOONG N F ET AL: "THE IMPLEMENTATION OF AN AUTOMATIC TOOL SELCTION SYSTEM FOR CNC NIBBLING", COMPUTERS IN INDUSTRY, ELSEVIER SCIENCE PUBLISHERS. AMSTERDAM, NL, Bd. 23, Nr. 3, 1. Dezember 1993 (1993-12-01), Seiten 205-222, XP000422075, ISSN: 0166-3615, DOI: 10.1016/0166-3615(93)90007-N
- DUFLOU J R ET AL: "Automated Tool Selection for Computer-Aided Process Planning in Sheet Metal Bending", CIRP ANNALS, ELSEVIER BV, NL, CH, FR, Bd. 54, Nr. 1, 1. Januar 2005 (2005-01-01) , Seiten 451-454, XP027601627, ISSN: 0007-8506, DOI: 10.1016/S0007-8506(07)60142-5 [gefunden am 2005-01-01]
- DUFLOU ET AL: "Computer aided process planning for sheet metal bending: A state of the art", COMPUTERS IN INDUSTRY, ELSEVIER SCIENCE PUBLISHERS. AMSTERDAM, NL, Bd. 56, Nr. 7, 1. September 2005 (2005-09-01), Seiten 747-771, XP005045576, ISSN: 0166-3615
- FARYAR ETESAMI ET AL: "Automatic Dimensional Inspection of Machine Part Cross-Sections Using Fourier Analysis", COMPUTER VISION, GRAPHICS, AND IMAGE PROCESSING, Bd. 29, Nr. 2, 1. Februar 1985 (1985-02-01), Seiten 216-247, XP055136741, ISSN: 0734-189X, DOI: 10.1016/0734-189X(85)90119-7

## Beschreibung

Die Erfindung betrifft ein System und ein Verfahren zum automatischen Erkennen von dreidimensionalen Umformungen in einem dreidimensionalen Modell eines Blechteils.

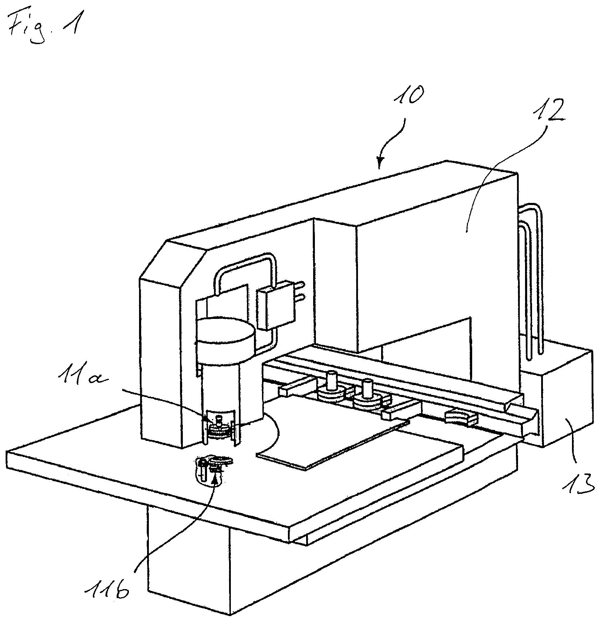

Die genannten Umformungen, wie z.B. Näpfe oder Sicken, können in der Praxis beispielsweise durch eine Maschine 10, welche in Fig. 1 gezeigt ist, in das Blechteil eingebracht werden. Die Maschine 10 umfasst hier ein zweiteiliges Umformwerkzeug 11a, 11b welches in einem Gehäuse 12 der Maschine 10 aufgenommen ist. Bei der Herstellung der Umformung wird das Blechteil (in der Figur nicht gezeigt) zwischen dem oberen und dem unteren Umformwerkzeug 11a, 11b hindurchgeführt, wobei die Umformwerkzeuge 11a, 11b an dem Blechteil angreifen, so dass eine Ausbuchtung erzeugt wird, welche die Umformung bildet. Um die Maschine 10 als CAM-Vorrichtung automatisiert im Rahmen eines CAM-Verfahrens (Computer Aided Manufacturing) einsetzen zu können, umfasst die Maschine 10 ferner einen Prozessor 13 für die automatische Ansteuerung der notwendigen Verfahrensschritte durch die einzelnen Maschinenteile auf der Basis elektronischer Daten.

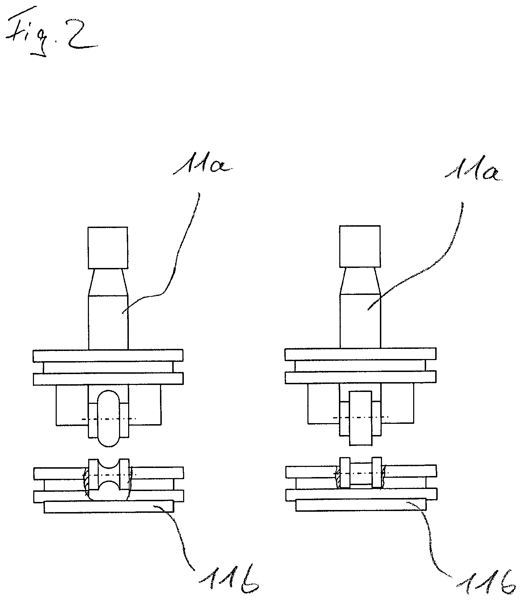

In Fig. 2 sind beispielhaft Paare von Umformwerkzeugen 11a, 11b dargestellt, die in der Maschine 10 von Fig. 1 eingesetzt werden können.

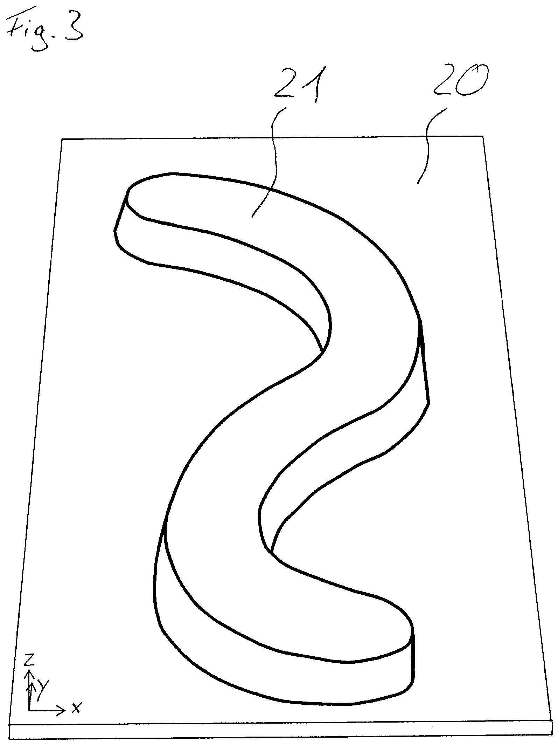

Eine dreidimensionale Darstellung eines auf diese Weise hergestellten Blechteils 20 mit Ausbuchtung 21 ist in der perspektivischen Ansicht von Fig. 3 gezeigt.

Bei der Herstellung solcher Blechteile muss, falls die Herstellung automatisiert mittels eines CAM-Verfahrens erfolgen soll, der entsprechenden CAM-Vorrichtung (wie z.B. der in Fig. 1 dargestellten Maschine 10 oder einem externen Computer) ein Modell zugeführt werden. Dieses wird herkömmlicherweise aus einem durch ein CAD-Verfahren (= Computer Aided Design = computerunterstützte Konstruktion) erzeugten dreidimensionalen Modell hergeleitet. Hierbei muss ermittelt werden, welches Werkzeug für die Erzeugung der dreidimensionalen Umformung verwendet werden soll. Gegenwärtig muss diese Information von Hand ermittelt und gegebenenfalls in eine CAM-Vorrichtung eingespeist werden, was sowohl zeit- als auch arbeitsintensiv ist.

Der Erfindung liegt daher die Aufgabe zugrunde, ein System und ein Verfahren zum automatischen Erkennen von dreidimensionalen Umformungen in einem dreidimensionalen Modell eines Blechteils anzugeben, mittels derer sich aus einem dreidimensionalen Modell des Blechteils mit einer Umformung eine automatische Zuordnung eines die Umformung erzeugenden Werkzeugs ermitteln lässt.

Diese Aufgabe wird durch ein System nach Anspruch 1 bzw. ein Verfahren nach Anspruch 10 gelöst. Bevorzugte Ausgestaltungen sind in den Unteransprüchen angegeben.

Ein System zum automatischen Erkennen von dreidimensionalen Umformungen in einem dreidimensionalen Modell eines Blechteils gemäß der Erfindung weist Folgendes auf:
eine Eingabeeinheit zum Eingeben von Daten eines dreidimensionalen Modells eines Blechteils, welches sich in einer durch eine erste Richtung X und eine zweiten Richtung Y aufgespannten Ebene erstreckt, wobei das Blechteil eine Ausbuchtung in eine dritte Richtung Z aufweist, welche zur ersten Richtung X und zur zweiten Richtung Y senkrecht ist;
eine Rechnereinheit, die dafür ausgelegt ist, einen horizontalen Schnitt mit dem dreidimensionalen Modell durch die Ausbuchtung parallel zu der durch die erste Richtung X und die zweite Richtung Y aufgespannten Ebene zu erzeugen, um einen geschlossenen zweidimensionalen horizontalen Querschnittsumriss der Ausbuchtung zu erhalten; sowie mindestens einen vertikalen Schnitt senkrecht zu der durch die erste Richtung X und die zweite Richtung Y aufgespannte Ebene des Blechteils zu erzeugen, um einen geschlossenen zweidimensionalen vertikalen Querschnittsumriss der Ausbuchtung zu erhalten, der sich zusammensetzt aus einer konvexen Teilstrecke S1, einer ersten Schnittteilstrecke S2, einer konkaven Teilstrecke S3 und einer zweiten Schnittteilstrecke S4, wobei sich die erste Schnittteilstrecke S2 und die zweite Schnittteilstrecke S4 jeweils zwischen einer ersten Seite des Blechs und einer gegenüberliegenden zweiten Seite desselben erstrecken, und
die Rechnereinheit weiter dafür ausgelegt ist, den horizontalen und den vertikalen Querschnittsumriss einer Fouriertransformation zu unterziehen, um spezifische Fourierkoeffizienten F1, F2 des horizontalen und des vertikalen Querschnittsumrisses zu ermitteln;
mindestens eine Speichereinheit, auf welcher eine Zuordnungstabelle gespeichert ist, die den Fourierkoeffizienten F1, F2 Werkzeugdaten zuordnet, wobei die Werkzeugdaten einen Werkzeugtyp angeben, und wobei die Rechnereinheit auf die Speichereinheit zugreifen kann, um die Werkzeugdaten durch die ermittelten Fourierkoeffizienten zu ermitteln; und
mindestens eine Ausgabeeinheit zum Ausgeben der Daten des dreidimensionalen Modells zusammen mit den Werkzeugdaten.

Unter Einsatz des erfindungsgemäßen Systems werden somit zwei Schnitte durch das dreidimensionale Modell der Ausbuchtung des Blechstücks erhalten, die eine Information über den Werkzeugtyp erlauben, durch welchen die Ausbuchtung erzeugt werden kann. Die Verknüpfung zwischen der Information über den Werkzeugtyp und der durch die Schnitte erhaltenen Querschnittsumrisse erfolgt über eine Fourier-Transformation der letztgenannten sowie eine Zuordnung der Fourierkoeffizienten, die sich aus der Transformation ergeben, durch eine Zuordnungstabelle. Auf diese Weise kann über die Ausgabeeinheit eine Werkzeuginformation ausgegeben werden, die in einem CAM-Prozess zur Auffindung des entsprechenden Werkzeugtyps verwendet werden kann. Auf diese Weise entfällt die bisher notwendige manuelle Eingabe der Werkzeugdaten in eine CAM-Vorrichtung, welche mit einem hohen Zeit- und Arbeitsaufwand verbunden ist. Durch die Verwendung von Fourierkoeffizienten anstelle der kompletten geometrischen Daten des Werkzeugs in einer Werkzeugdatenbank ist das Suchen und Auffinden entsprechender Werkzeuge mit geringerem technischen Aufwand möglich, da eine Liste der Koeffizienten schneller durchsucht werden kann als eine Vielzahl komplexer Werkzeuggeometriedaten.

Die erste Schnittteilstrecke S2 und die zweite Schnittteilstrecke S4 können sich insbesondere senkrecht zu der durch die erste Richtung X und die zweite Richtung Y aufgespannten Ebene erstrecken. Hierbei wird eine besonders genaue Wiedergabe des Werkzeugtyps ermöglicht.

Ferner ist es möglich, dass sich die erste Schnittteilstrecke S2 und die zweite Schnittteilstrecke S4 an jeweiligen Positionen in der ersten Richtung X und der zweiten Richtung Y erstreckten, an denen die Ausbuchtung beginnt bzw. endet. Mit anderen Worten schließen sich die Schnittteilstrecken S2 und S4 unmittelbar an die Ausbuchtung an, wodurch der Umriss der Ausbuchtung besonders exakt wiedergegeben wird, was die Sicherheit der Zuordnung zu einem entsprechenden Werkzeugtyp erhöht.

Gemäß einer weiteren Ausgestaltung der Erfindung ist die Rechnereinheit dafür ausgelegt, einen weiteren vertikalen Schnitt zu erzeugen, welcher von dem genannten vertikalen Schnitt verschieden ist, und den sich durch den weiteren vertikalen Schnitt ergebenden weiteren vertikalen Querschnittsumriss der Ausbuchtung einer Fouriertransformation zu unterziehen, um einen spezifischen Fourierkoeffizienten des weiteren vertikalen Querschnittsumrisses zu ermitteln. Diese Ausgestaltung bietet die Möglichkeit, durch den weiteren vertikalen Schnitt eine eindeutige Zuordnung zu einem Werkzeugtyp zu erhalten, wenn eine solche eindeutige Zuordnung durch den ersten vertikalen Schnitt nicht möglich war. In diesem Fall kann der Fourierkoeffizient des ersten vertikalen Schnitts verworfen werden und für die Zuordnung lediglich der Fourierkoeffizient des weiteren vertikalen Schnitts verwendet werden. Ferner kann eine Zuordnung über beide oder mehrere vertikale Schnitte getroffen werden. Auf diese Weise kann die Treffsicherheit des Systems in Bezug auf die Werkzeuginformation erhöht werden, oder auch unterschiedliche und variable Profiltiefen behandelt werden. Selbstverständlich können mehrere weitere vertikale Schnitte an verschiedenen Stellen erzeugt werden, bis eine eindeutige Zuordnung des entsprechenden Fourierkoeffizienten zu einem Werkzeugtyp möglich ist.

Das erfindungsgemäße System kann ferner eine Anzeigeeinheit aufweisen und die Rechnereinheit kann dafür ausgelegt sein, eine manuelle Eingabe von Werkzeugdaten über die Anzeigeeinheit anzufordern, wenn für die ermittelten Fourierkoeffizienten keine entsprechenden Werkzeugdaten in der Speichereinheit gespeichert sind. Auf diese Weise ist es möglich, die Zuordnungstabelle zu ergänzen und neue Werkzeugtypen zu integrieren.

Die Rechnereinheit kann darüber hinaus dafür ausgelegt sein, aus den Daten des dreidimensionalen Modells des Blechteils ein zweidimensionales Modell des Blechteils in der durch die erste Richtung X und die zweite Richtung Y aufgespannten Ebene zu erzeugen und in das zweidimensionale Modell die ermittelten oder eingegebenen Werkzeugdaten zu integrieren. Somit kann ein Datensatz erzeugt werden, der insbesondere alle für den Einsatz in einer CAM-Vorrichtung notwendigen Informationen in komprimierter Form enthält. Diese Daten können von der CAM-Vorrichtung unmittelbar zur Steuerung eines CAM-Verfahrens zur automatisierten Herstellung eines Blechteils mit entsprechender Ausbuchtung eingesetzt werden.

Bei einer weiteren Ausgestaltung der Erfindung ist Rechnereinheit dafür ausgelegt, die ermittelten oder eingegebenen Werkzeugdaten als Textbaustein in das zweidimensionale Modell des Blechteils zu integrieren. Diese Ausgestaltung eignet sich insbesondere für die bildliche Wiedergabe eines Modells eines Blechstücks mit Ausbuchtung, da hier der Werkzeugtyp auch unmittelbar optisch durch einen Benutzer erfasst werden kann. Die Eingabeeinheit kann weiter dafür ausgelegt sein, Werkzeugdaten zur Speicherung in der Zuordnungstabelle der Speichereinheit einzugeben. Auf diese Weise kann die Zuordnungstabelle manuell oder automatisch ergänzt bzw. neuen Werkzeugtypen angepasst werden.

Um einen Querschnittsumriss zu erhalten, welcher dem einzusetzenden Werkzeugtyp möglichst exakt entspricht, ist es vorzuziehen, dass der horizontale Schnitt auf einer Höhe in der dritten Richtung Z erfolgt, die zwischen dem höchsten Punkt der Ausbuchtung und derjenigen Seite des Blechstücks liegt, auf welcher die Konvexität der Ausbuchtung ausgebildet ist. Ein erfindungsgemäßes Verfahren zum automatischen Erkennen von dreidimensionalen Umformungen in einem dreidimensionalen Modell eines Blechteils weist die folgenden Schritte auf:
Erfassen von Daten eines dreidimensionalen Modells eines Blechteils, welches sich in einer durch eine erste Richtung X und eine zweite Richtung Y aufgespannten Ebene erstreckt, wobei das Blechteil eine Ausbuchtung in eine dritte Richtung Z aufweist, welche zu der durch die erste Richtung X und die zweite Richtung Y aufgespannten Ebene senkrecht ist;
Erzeugen eines horizontalen Schnitts mit dem dreidimensionalen Modell durch die Ausbuchtung parallel zu der durch die erste Richtung X und die zweite Richtung Y aufgespannte Ebene, um einen geschlossenen zweidimensionalen horizontalen Querschnittsumriss der Ausbuchtung zu erhalten; sowie
Erzeugen mindestens eines vertikalen Schnitts senkrecht zu der durch die erste Richtung X und die zweite Richtung Y aufgespannten Ebene des Blechteils, um einen geschlossenen zweidimensionalen vertikalen Querschnittsumriss der Ausbuchtung zu erhalten, der sich zusammensetzt aus einer konvexen Teilstrecke S1, einer ersten Schnittteilstrecke S2, einer konkaven Teilstrecke S3 und einer zweiten Schnittteilstrecke S4, wobei sich die erste Schnittteilstrecke S2 und die zweite Schnittteilstrecke S4 jeweils zwischen einer ersten Seite des Blechs und einer gegenüberliegenden zweiten Seite desselben erstrecken, Anwenden einer Fourier-Transformation auf den horizontalen Querschnittsumriss und den vertikalen Querschnittsumriss, um spezifische Fourierkoeffizienten F1, F2 des horizontalen und des vertikalen Querschnittsumrisses zu ermitteln;
Speichern einer Zuordnungstabelle, die den Fourierkoeffizienten F1, F2 Werkzeugdaten zugeordnet, wobei die Werkzeugdaten einen Werkzeugtyp angeben; und
Ausgeben der Daten des dreidimensionalen Modells zusammen mit den Werkzeugdaten.

Die durch das erfindungsgemäße Verfahren erzielbaren Vorteile und Effekte sind gleich denjenigen, die vorstehend in Zusammenhang mit dem erfindungsgemäßen System beschrieben wurden.

Die Erfindung wird im Folgenden anhand eines Ausführungsbeispiels mit Bezug auf die beigefügten Zeichnungen näher erläutert. In den Zeichnungen zeigen:
- Fig. 1: eine Maschine zur Herstellung einer Umformung in einem Blechteil;
- Fig. 2: in der Maschine von Fig. 1 einsetzbare Umformwerkzeuge;
- Fig. 3: ein Blechstück mit einer dreidimensionalen Umformung, welche durch die Maschine von Fig. 1 erzeugt werden kann;
- Fig. 4: eine schematische Darstellung eines Systems gemäß einer Ausführungsform der Erfindung;
- Fig. 5: das Blechstück mit Umformung von Fig. 5 mit eingezeichneten Schnittebenen für einen horizontalen Schnitt und einen vertikalen Schnitt;
- Fig. 6: eine Ansicht des horizontalen Schnitts durch die Umformung in dem Blechteil von Fig. 5;
- Fig. 7: eine Ansicht des vertikalen Schnitts durch die Umformung im Blechteil von Fig. 6; und
- Fig. 8: ein Flussdiagramm, welches die Schritte eines Verfahrens nach einer Ausführungsform der Erfindung veranschaulicht.

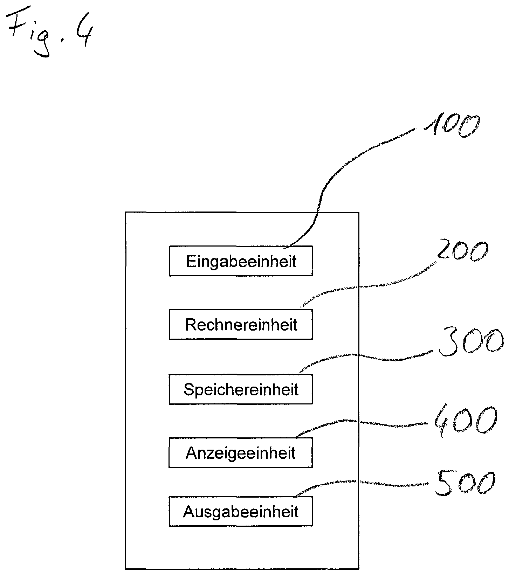

In Fig. 4 sind schematisch wesentliche Elemente eines Systems zum automatischen Erkennen von dreidimensionalen Umformungen auf in einem dreidimensionalen Modell eines Blechteils schematisch dargestellt. Wie dies in der Figur zu erkennen ist, umfasst ein System gemäß einer ersten Ausführungsform der Erfindung eine Eingabeeinheit 100, beispielsweise eine Schnittstelle zur Datenübertragung oder eine Benutzungsschnittstelle aus Maus und Tastatur, zur manuellen oder automatischen Eingabe von Daten eines dreidimensionalen Modells eines Blechteils, eine Rechnereinheit 200, welche einen Prozessor umfasst und dafür ausgelegt ist, die für das Erkennen der Umformungen notwendigen Verfahrensschritte auszuführen, eine Speichereinheit 300 zur Speicherung einer Zuordnungstabelle, sowie optional eine Anzeigeeinheit 400, z.B. einen Monitor, zur Kommunikation mit einem Benutzer und eine Ausgabeeinheit 500. Die Eingabeeinheit 100, die Speichereinheit 300 die Anzeigeeinheit 400 sowie die Ausgabeeinheit 500 sind mit der Rechnereinheit 200 funktional verbunden.

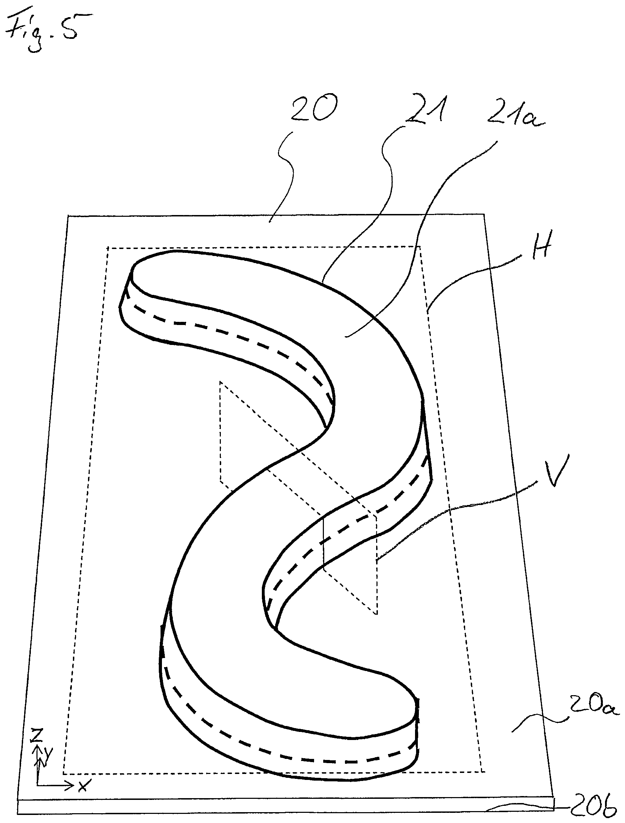

Mit nunmehrigem Bezug auf Fig. 5 wird das Prinzip eines erfindungsgemäßen Verfahrens erläutert, welches beispielsweise mit dem in Fig. 4 dargstellten System ausgeführt werden kann. Fig. 5 stellt eine perspektivische Ansicht des Blechteils 20 mit der Ausbuchtung 21 von Fig. 3 als ein dreidimensionales Modell dar, wie es beispielsweise im Rahmen eines CAD-Verfahrens erzeugt wird. Wie dies in der Figur gezeigt ist, erstreckt sich das Blechteil 20 des dreidimensionalen Modells in einer durch eine erste Richtung X und eine zweite Richtung Y aufgespannten Ebene, wobei die Ausbuchtung 21 in einer Richtung Z ausgeprägt ist, so dass das Blechteil 20 mit der Ausbuchtung 21 insgesamt eine dreidimensionales Einheit bildet.

In Fig. 5 sind dabei zusätzlich zwei Schnittebenen eingezeichnet, nämlich eine horizontale Schnittebene H parallel zu der durch die ersten und die zweiten Richtung X, Y aufgespannten Ebene und eine vertikale Schnittebene V senkrecht zu der durch die erste und die zweite Richtung X, Y aufgespannten Ebene. Im Rahmen des erfindungsgemäßen Verfahrens werden zunächst ein horizontaler Schnitt entlang der horizontalen Schnittebene H sowie ein vertikaler Schnitt entlang der vertikalen Schnittebene V durch das dreidimensionale Modell ausgeführt. Die in der Figur eingezeichneten Lagen der horizontalen Schnittebene H und der vertikalen Schnittebene V sind lediglich beispielhaft angegeben. Sie können auch an anderen Stellen der Ausbuchtung 21 angesetzt werden, solange sie jeweils die Ausbuchtung 21 schneiden.

Durch den horizontalen Schnitt und den vertikalen Schnitt werden ein horizontaler bzw. ein vertikaler Querschnittsumriss der Ausbuchtung 21 erzeugt, welche im gezeigten Ausführungsbeispiel jeweils eine geschlossene Kontur bilden. Dabei verläuft der horizontale Schnitt vorzugsweise zwischen einem in Z-Richtung höchstgelegenen Punkt 21a der Ausbuchtung 21 und derjenigen Seite des Blechstücks 20, welche dem höchstgelegenen Punkt 21a in Z-Richtung am nächsten liegt. Bei der genannten Seite des Blechstücks 20 handelt es sich um eine Oberseite 20a, welche im Rahmen der Erfindung so definiert ist, dass sie die Seite ist, auf welcher die Konvexität der Ausbuchtung ausgebildet ist. Der "höchste Punkt" 21a ist im vorliegenden Fall, wie aus der Figur zu entnehmen ist, ein ebener flächiger Bereich, welcher den oberen Abschluss der Ausbuchtung 21, mit anderen Worten deren Oberseite, bildet. Insbesondere kann der horizontale Schnitt so gemacht werden, dass er nur geringfügig unterhalb des höchsten Punktes 21a d.h. nur geringfügig unterhalb der Oberseite der Ausbuchtung 21 verläuft. Unter "geringfügig" ist im Rahmen der Erfindung beispielsweise ein Abstand von wenigen µm bis wenigen mm zu verstehen.

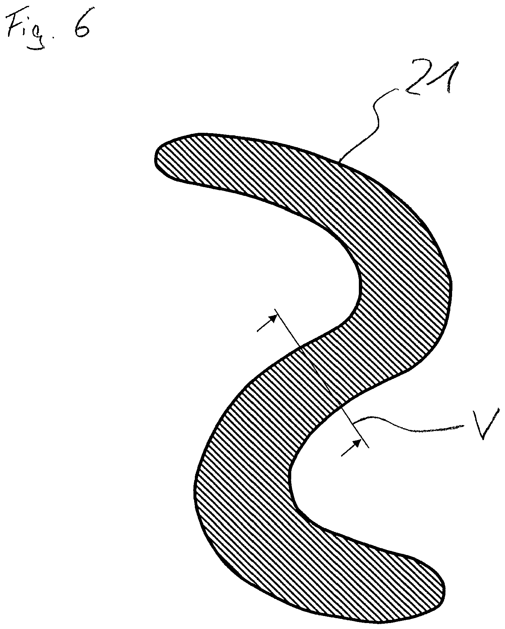

Demgegenüber kann der vertikale Schnitt an verschiedenen Stellen entlang der Verlaufsrichtung der Ausbuchtung 21 gesetzt werden, wobei er jedoch vorzugsweise senkrecht zur momentanen Verlaufsrichtung an der Schnittstelle gemacht wird (die Verlaufsrichtung ist in Fig. 6 durch Pfeile angedeutet).

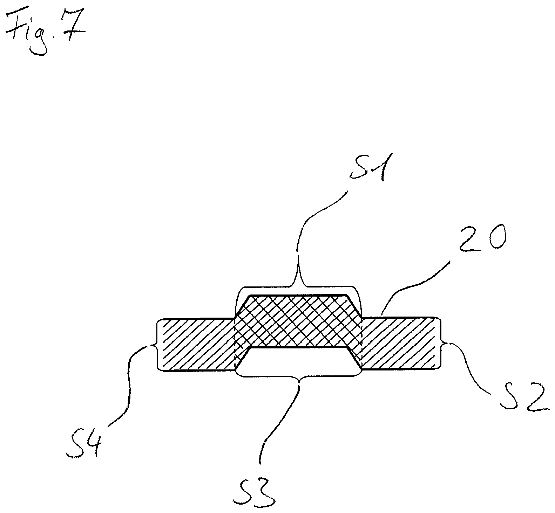

In Fig. 6 ist in Draufsicht der geschlossene horizontale Querschnittsumriss gezeigt, welcher sich durch den vorstehend beschriebenen horizontalen Schnitt ergibt. Da der horizontale Schnitt im vorliegenden Fall nur geringfügig unterhalb der Oberseite der Ausbuchtung 21 verläuft, entspricht die Fläche innerhalb des gezeigten Querschnittsumrisses näherungsweise der Fläche der Oberseite der Ausbuchtung 21, wie sie in Fig. 5 gezeigt ist. Durch die Linie V durch den Querschnittsumriss von Fig. 6 ist der vertikale Schnitt angedeutet, welcher die in Fig. 7 gezeigte Ansicht ergibt.

Hat die Ausbuchtung nicht wie in Fig. 5 gezeigt eine Form mit einer Strecke, beispielsweise die in Fig. 5 gezeigte S-Form mit zwei Endpunkten, sondern eine geschlossene Form, beispielsweise ein Ring, ergibt sich durch den horizontalen schnitt nicht eine geschlossene Kontur, sondern zwei, in diesem Fall kreisförmige Konturen, nämlich die Innenkreiskontur und die Außenkreiskontur der kreisförmigen Ausbuchtung.

Wie in Fig. 7 zu erkennen ist, führt der vertikale Schnitt senkrecht zu der durch die ersten Richtung X und die zweite Richtung Y aufgespannten Ebene ebenfalls zu einem geschlossenen Querschnittsumriss, welcher aus einer Folge aus mehreren Teilstrecken zusammengesetzt ist, nämlich aus einer konvexen Teilstrecke S1, einer ersten Schnittteilstrecke S2, einer konkaven Teilstrecke S3 und einer zweiten Schnittteilstrecke S4. Dabei erstreckt sich die konvexe Teilstrecke S1 von der Oberseite des Blechstücks 20 hier schräg nach oben in Z-Richtung, geht dann in einen flachen Teil über, der hier parallel zur Oberseite des Blechstücks 20 verläuft, und erstreckt sich im weiteren Verlauf schräg nach unten bis wiederum zur Oberseite des Blechstücks 20. Die daran anschließende Schnittteilstrecke S2 erstreckt sich hier in Z-Richtung senkrecht nach unten von der Oberseite des Blechstücks 20 bis zu einer gegenüberliegenden Unterseite desselben. Die konkave Teilstrecke S3 ist hier wieder aus einem schräg nach oben verlaufenden Teil, einem daran anschließenden näherungsweise parallel zur Oberseite des Blechstücks 20 und einem schräg nach unten verlaufenden Teil zusammengesetzt. Der Querschnittsumriss wird schließlich durch die Schnittteilstrecke S4 geschlossen, die sich hier im Wesentlichen senkrecht zwischen der Unterseite des Blechstücks 20 und dessen Oberseite erstreckt.

Somit werden durch die beiden Schnitte zwei geschlossene Querschnittsumrisse erhalten, die einen geschlossenen Polygonzug darstellen. Ein solcher geschlossener Polygonzug kann, wie dies bekannt ist, einer Fourier-Transformation unterzogen werden, durch die für jeden geschlossenen Polygonzug ein Fourierkoeffizient F1, F2 erhalten wird. Das Verfahren der Fourier-Transformation ist dem Fachmann auf dem Gebiet der computerunterstützten Konstruktion wohlbekannt, beispielsweise aus Bronstein, Semendjajew, Taschenbuch der Mathematik, und soll deshalb an dieser Stelle nicht näher erläutert werden.

Mittels dieser Fourierkoeffizienten F1, F2 lässt sich eine Zuordnung der Geometrie der Ausbuchtung 21 zu einem Werkzeug treffen, mittels dessen eine Ausbuchtung 21 mit dieser Geometrie erzeugt werden kann.

Sind weitere Querschnittsumrisse vorhanden, beispielsweise im Falle einer ringförmigen Ausbuchtung zwei horizontale Querschnittsumrisse, kann eine Zuordnung durch die Bildung entsprechender weiterer Fourierkoeffizienten gebildet werden.

Eine entsprechende Zuordnungstabelle, welche verschiedene Fourierkoeffizienten F1, F2 mit entsprechenden Werkzeugdaten verknüpft, kann in der in Fig. 4 gezeigten Speichereinheit 300 eingespeichert sein. Die Werkzeugdaten können dann über die Ausgabeeinheit 500 von Fig. 4 ausgegeben und beispielsweise einer CAM-Vorrichtung, wie sie in Fig. 1 gezeigt ist, zugeführt werden.

Es ist anzumerken, dass die konvexe Teilstrecke S1 allgemein diejenige Teilstrecke darstellt, welche sich zwischen jeweiligen Positionen in der ersten Richtung X und der zweiten Richtung Y, an denen die Ausbuchtung beginnt bzw. endet, oberhalb der Oberseite des Blechstücks 20 erstreckt. Auf ähnliche Weise stellt die konkave Teilstrecke S3 allgemein diejenige Teilstrecke dar, welche sich zwischen jeweiligen Positionen in der ersten Richtung X und der zweiten Richtung Y, an denen die Ausbuchtung beginnt bzw. endet, oberhalb der Unterseite des Blechstücks 20 erstreckt.

Dies hat auch zum Ergebnis, dass sich für unterschiedliche Umformhöhen unterschiedliche Querschnittsumrisse durch den vertikalen Schnitt ergeben. Dies schlägt sich wiederum in unterschiedlichen Fourierkoeffizienten für den Querschnittsumriss nieder. Aufgrund der noch vorhandenen Ähnlichkeiten der Fourierkoeffizienten kann auf ein dafür verwendbares Werkzeug geschlossen werden, und es können zusätzlich dafür benötigte Bearbeitungsparameter wie beispielsweise die Eindringtiefe ermittelt werden.

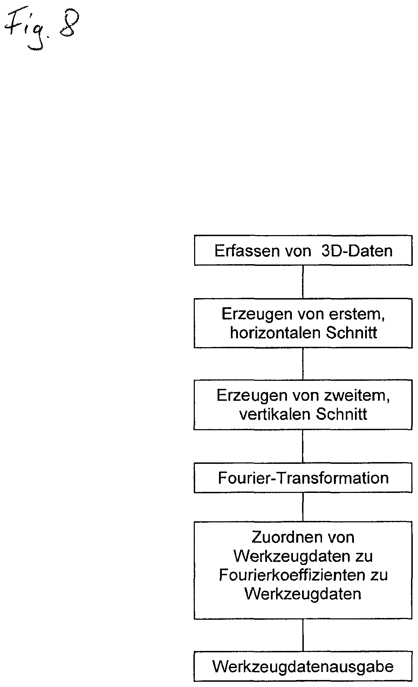

Der Ablauf eines erfindungsgemäßen Verfahrens lässt sich dem schematischen Flussdiagramm von Fig. 8 entnehmen.

Demzufolge werden in einem ersten Schritt St1 Daten einer dreidimensionalen Abbildung (= 3D-Abbildung) eines Blechteils mit einer dreidimensionalen Umformung erfasst. Dies erfolgt beispielsweise durch Erstellen eines dreidimensionalen Modell durch einen Benutzer auf dem System oder durch Übermitteln eines solchen Modells an das erfindungsgemäße System.

Anschließend wird in einem Schritt St2 ein horizontaler Schnitt durch die Ausbuchtung des Modells berechnet. Hierzu wird eine Ebene parallel zur Richtung X und zur Richtung Y eingesetzt, um deren Schnittfläche mit der Ausbuchtung zu ermitteln.

In einem Schritt St3 werden ein oder mehrere vertikale Schnitte durch die Ausbuchtung (dreidimensionale Umformung) des Modells ausgeführt. Hierbei wird eine Ebene senkrecht zu der durch Richtung X und Richtung Y aufgespannten Ebene verwendet, um eine Querschnittsfläche des Blechstücks zu erhalten. Die Ausrichtung der Ebene erfolgt hier vorzugsweise so, dass sie senkrecht zum Längsverlauf der Ausbuchtung verläuft. Um einen geschlossenen Querschnittsumriss der Ausbuchtung zu erhalten, wird die Querschnittsfläche dort, wo sie sich von dem Blechteil abhebt, begrenzt. Es wird dafür dort, wo die Ausbuchtung erstmalig in Richtung Z von der Grundfläche des Blechteils abweicht, die Querschnittsfläche senkrecht zum Blech des Blechteils begrenzt.

Danach werden in einem Schritt St4 die durch die Schnitte erhaltenen geschlossenen Querschnittsumrisse einer Fourier-Transformation unterzogen, um Fourierkoeffizienten der Querschnittsumrisse zu erhalten. Für eine Ausbuchtung mit in ihrem Verlauf variabler Ausdehnung in Richtung Z kann es erforderlich sein, zwei oder mehrere vertikale Schnitte und entsprechende Koeffizienten zu berechnen, um ein Werkzeug eindeutig zu bestimmen.

Den so erhaltenen Fourierkoeffizienten werden in einem nächsten Schritt St5 Werkzeugdaten eines Werkzeugtyps zugeordnet, beispielsweise mit Hilfe einer vordefinierten Zuordnungstabelle. Hierfür wird in der Tabelle nach sich in bestimmten Toleranzbereichen bewegenden Koeffizienten gesucht, und zu entsprechenden Koeffizienten gespeicherte Werkzeuginformation, beispielsweise eine Identifikationsnummer des Werkzeugs, ausgelesen. Sollte zu den Koeffizienten keine entsprechende Werkzeuginformation vorhanden sein, wird der Benutzer aufgefordert, entsprechende Information einzugeben. In diesem Fall wird die eingegebene Information dauerhaft in der Zuordnungstabelle gespeichert und steht auch für spätere Anwendungsfälle zur Verfügung.

Schließlich erfolgt in einem Schritt St6 die Ausgabe der Werkzeugdaten des so ermittelten Werkzeugtyps.

Einzelne Komponenten des Systems, beispielsweise Steuerkomponenten der Rechnereinheit können gegebenenfalls durch Einsatz eines Dongles, d.h. einer Vorrichtung, die nicht replizierbar ist und deren Präsenz von den Steuerkomponenten für den eigenen Betrieb erforderlich ist und abgefragt wird, gegen unautorisiertes Einspeisen von Daten gesichert werden.

Dem Fachmann ist offensichtlich, dass innerhalb des Umfangs der Ansprüche Abwandlungen der oben ohnehin nur beispielhaft beschriebenen Ausführungsform möglich sind. So ist die Erfindung nicht auf das beschriebene abgeflachte Profil der Ausbuchtung beschränkt, sondern auf jedes Profil anwendbar. Ferner ist es nicht nur auf laufende Umformungswerkzeuge beschränkt, sondern auch auf Stanz- oder Stempelwerkzeuge oder andere anwendbar.

Insbesondere ist die Erfindung nicht darauf beschränkt, die Koeffizienten für die Zuordnung zwischen der zu formenden Ausbuchtung und dem Werkzeug mittels Fourier-Transformation zu bestimmen. Diese ist zwar vorteilhaft, da aus den hiermit ermittelten Fourierkoeffizienten der Schwerpunkt des Werkzeugs bestimmt werden kann. Letzteres ist hilfreich für die Positionierung des Werkzeugs zum Werkstück. Alternativ können andere Transformationen, insbesondere Integraltransformationen, beispielsweise die Laplace-Transformation zur Bestimmung der Koeffizienten verwendet werden.

Die Junktoren ... "und", "oder" und "entweder ... oder" werden in der Bedeutung verwendet, die an die logische Konjunktion, die logische Adjunktion (oft "und/oder"), bzw. die logische Contravalenz angelehnt sind.

Offenbart ist ein System gemäß der Erfindung, wobei das System eine Anzeigeeinheit (400) aufweist und die Rechnereinheit (200) dafür ausgelegt ist, eine manuelle Eingabe von Werkzeugdaten über die Anzeigeeinheit (400) anzufordern wenn für die ermittelten Fourierkoeffizienten keine entsprechenden Werkzeugdaten in der Speichereinheit (300) gespeichert sind.

Bei diesem System ist die Rechnereinheit (300) dafür ausgelegt, die ermittelten oder eingegebenen Werkzeugdaten als Textbaustein in das zweidimensionale Modell des Blechteils (20) zu integrieren.

Bei diesem System ist die Eingabeeinheit (100) weiter dafür ausgelegt, Werkzeugdaten zur Speicherung in der Zuordnungstabelle der Speichereinheit (300) einzugeben.

Offenbart ist ferner ein erfindungsgemäßes Verfahren, das ferner den Schritt aufweist:
Anfordern einer manuellen Eingabe von Werkzeugdaten über eine Anzeigeeinheit (400), wenn für die ermittelten Fourierkoeffizienten keine entsprechenden Werkzeugdaten (300) gespeichert sind.

Das Verfahren kann ferner den Schritt aufweisen:
Integrieren der ermittelten oder eingegebenen Werkzeugdaten als Textbaustein in das zweidimensionale Modell des Blechteils (20).

Das Verfahren kann ferner den Schritt aufweisen:
Eingeben von Werkzeugdaten zur Speicherung in der Zuordnungstabelle.

## Patentansprüche

1. System zum automatischen Erkennen von dreidimensionalen Umformungen in einem dreidimensionalen Modell eines Blechteils (20), das aufweist:
eine Eingabeeinheit (100) zum Eingeben von Daten eines dreidimensionalen Modells eines Blechteils (20), welches sich in einer durch eine erste Richtung X und eine zweite Richtung Y aufgespannte Ebene erstreckt, wobei das Blechteil (20) eine Ausbuchtung (21) in eine dritte Richtung Z aufweist, welche zu der durch die erste Richtung X und die zweite Richtung Y aufgespannten Ebene senkrecht ist;
eine Rechnereinheit (200), die dafür ausgelegt ist,
einen horizontalen Schnitt mit dem dreidimensionalen Modell durch die Ausbuchtung (21) parallel zu der durch die erste Richtung X und die zweite Richtung Y aufgespannten Ebene zu erzeugen, um mindestens einen geschlossenen zweidimensionalen horizontalen Querschnittsumriss der Ausbuchtung (21) zu erhalten; sowie
mindestens einen vertikalen Schnitt senkrecht zur durch die erste Richtung X und die zweite Richtung Y aufgespannte Ebene des Blechteils (20) zu erzeugen, um jeweils einen geschlossenen zweidimensionalen vertikalen Querschnittsumriss der Ausbuchtung (21) für jeden vertikalen Schnitt zu erhalten, der sich zusammensetzt aus
einer konvexen Teilstrecke (S1),
einer ersten Schnittteilstrecke (S2),
einer konkaven Teilstrecke (S3) und
einer zweiten Schnittteilstrecke (S4)
wobei sich die erste Schnittteilstrecke (S2) und die zweite Schnittteilstrecke (S4) jeweils zwischen einer ersten Seite des Blechs (20) und einer gegenüberliegenden zweiten Seite desselben erstrecken, und
die Rechnereinheit (200) weiter dafür ausgelegt ist, den mindestens einen horizontalen und den vertikalen Querschnittsumriss einer Transformation zu unterziehen, um spezifische Transformationskoeffizienten (F1, F2) des mindestens einen horizontalen und des vertikalen Querschnittsumrisses zu ermitteln;
mindestens eine Speichereinheit (300), auf welcher eine Zuordnungstabelle gespeichert ist, die den Transformationskoeffizienten (F1, F2) Werkzeugdaten zugeordnet, wobei die Werkzeugdaten einen Werkzeugtyp angeben, und wobei die Rechnereinheit (200) auf die Speichereinheit zugreifen kann, um die Werkzeugdaten durch die ermittelten Transformationskoeffizienten zu ermitteln; und
mindestens eine Ausgabeeinheit zum Ausgeben der Daten des dreidimensionalen Modells zusammen mit den Werkzeugdaten.

2. System nach Anspruch 1, wobei die Transformation eine Fourier-Transformation, insbesondere eine diskrete Fourier-Transformation, und die Transformationskoeffizienten Fourierkoeffizienten sind.

3. System nach einem der Ansprüche 1 oder 2, wobei
die Recheneinheit (200) dafür ausgelegt ist, durch den horizontalen Schnitt zwei geschlossene zweidimensionale horizontale Querschnittsumrisse der Ausbuchtung (21) zu erhalten, und
die Rechnereinheit (200) dafür ausgelegt ist, sowohl den ersten als auch den zweiten horizontalen Querschnittsumriss der Transformation zu unterziehen, um spezifische Transformationskoeffizienten zu erhalten.

4. System nach einem der Ansprüche 1 bis 3, wobei sich die erste Schnittteilstrecke (S2) und die zweite Schnittteilstrecke (S4) senkrecht zur durch die erste Richtung X und die zweite Richtung Y aufgespannten Ebene erstrecken.

5. System nach einem der Ansprüche 1 bis 4, wobei sich die erste Schnittteilstrecke (S2) und die zweite Schnittteilstrecke (S4) an jeweiligen Positionen in der ersten Richtung X und der zweiten Richtung Y erstrecken, an denen die Ausbuchtung beginnt bzw. endet.

6. System nach einem der Ansprüche 1 bis 5, wobei die Rechnereinheit (200) dafür ausgelegt ist, einen weiteren vertikalen Schnitt zu erzeugen, welcher von dem genannten vertikalen Schnitt verschieden ist, und den sich durch den weiteren vertikalen Schnitt ergebenden weiteren vertikalen Querschnittsumriss der Ausbuchtung (21) einer Fourier-Transformation zu unterziehen, um einen spezifischen Fourierkoeffizienten (F3) des weiteren vertikalen Querschnittsumrisses zu ermitteln.

7. System nach einem der Ansprüche 1 bis 6, wobei die Rechnereinheit (300) dafür ausgelegt ist, aus den Daten des dreidimensionalen Modells des Blechteils (20) ein zweidimensionales Modell des Blechteils (20) in der durch die erste Richtung X und die zweite Richtung Y aufgespannten Ebene zu erzeugen und in das zweidimensionale Modell die ermittelten oder eingegebenen Werkzeugdaten zu integrieren.

8. System nach einem der vorhergehenden Ansprüche, wobei der horizontale Schnitt auf einer Höhe in der dritten Richtung Z erfolgt, die zwischen dem höchsten Punkt der Ausbuchtung (21) und derjenigen Seite des Blechstücks (20) liegt, auf welcher die Konvexität der Ausbuchtung ausgebildet ist.

9. Verfahren zum automatischen Erkennen von dreidimensionalen Umformungen in einem dreidimensionalen Modell eines Blechteils (20), das die folgenden Schritte aufweist:
Erfassen von Daten eines dreidimensionalen Modells eines Blechteils (20), welches sich in einer durch eine erste Richtung X und eine zweite Richtung Y aufgespannten Ebene erstreckt, wobei das Blechteil (20) eine Ausbuchtung (21) in eine dritte Richtung Z aufweist, welche zur durch die erste Richtung X und die zweite Richtung Y aufgespannten Ebene senkrecht ist;
Erzeugen eines horizontalen Schnitts mit dem dreidimensionale Modell durch die Ausbuchtung (21) parallel zur durch die erste Richtung X und die zweite Richtung Y aufgespannten Ebene, um mindestens einen geschlossenen zweidimensionalen horizontalen Querschnittsumriss der Ausbuchtung (21) zu erhalten; sowie
Erzeugen mindestens eines vertikalen Schnitts senkrecht zu der durch die erste Richtung X und die zweite Richtung Y aufgespannten Ebene des Blechteils (20), um jeweils einen geschlossenen zweidimensionalen vertikalen Querschnittsumriss der Ausbuchtung (21) für jeden vertikalen Schnitt zu erhalten, der sich zusammensetzt aus
einer konvexen Teilstrecke (S1),
einer ersten Schnittteilstrecke (S2),
einer konkaven Teilstrecke (S3) und
einer zweiten Schnittteilstrecke (S4)
wobei sich die erste Schnittteilstrecke (S2) und die zweite Schnittteilstrecke (S4) jeweils zwischen einer ersten Seite des Blechs (20) und einer gegenüberliegenden zweiten Seite desselben erstrecken,
Anwenden einer Transformation auf den mindestens einen horizontalen Querschnittsumriss und den vertikalen Querschnittsumriss, um spezifische Fourierkoeffizienten (F1, F2) des mindestens einen horizontalen und des vertikalen Querschnittsumrisses zu ermitteln;
Speichern einer Zuordnungstabelle, die den Fourierkoeffizienten (F1, F2) Werkzeugdaten zugeordnet, wobei die Werkzeugdaten einen Werkzeugtyp angeben; und
Ausgeben der Daten des dreidimensionalen Modells zusammen mit den Werkzeugdaten.

10. Verfahren nach Anspruch 9, wobei die Transformation eine Fourier-Transformation, insbesondere eine diskrete Fourier-Transformation und die Transformationskoeffizienten Fourierkoeffizienten sind.

11. Verfahren nach einem der Ansprüche 9 oder 10, wobei
beim Erzeugen des horizontalen Schnitts zwei geschlossene zweidimensionale horizontale Querschnittsumrisse der Ausbuchtung (21) erhalten werden, und
beim Anwenden der Transformation die Transformation sowohl den ersten als auch den zweiten horizontalen Querschnittsumriss der Transformation angewandt wird, um spezifische Transformationskoeffizienten für den sowohl den ersten als auch den zweiten horizontalen Querschnittsumriss zu erhalten.

12. Verfahren nach einem der Ansprüche 9 bis 11, wobei sich beim Erzeugen des vertikalen Schnitts die erste Schnittteilstrecke (S2) und die zweite Schnittteilstrecke (S4) senkrecht zur durch die erste Richtung X und die zweite Richtung Y aufgespannten Ebene erstrecken.

13. Verfahren nach einem der Ansprüche 9 bis 12, wobei sich beim Erzeugen des vertikalen Schnitts die erste Schnittteilstrecke (S2) und die zweite Schnittteilstrecke (S4) an jeweiligen Positionen in der ersten Richtung X und der zweiten Richtung Y erstreckt, an denen die Ausbuchtung beginnt bzw. endet.

14. Verfahren nach einem der Ansprüche 9 bis 13, das ferner die Schritte aufweist:
Erzeugen eines weiteren vertikalen Schnitts, welcher von dem genannten vertikalen Schnitt verschieden ist, und
Anwenden einer Fourier-Transformation auf den sich durch den weiteren vertikalen Schnitt ergebenden weiteren vertikalen Querschnittsumriss der Ausbuchtung (21), um einen spezifischen Fourierkoeffizienten (F3) des weiteren vertikalen Querschnittsumrisses zu ermitteln.

15. Verfahren nach einem der Ansprüche 9 bis 14, das ferner den Schritt aufweist:
Erzeugen aus den Daten des dreidimensionalen Modells des Blechteils (20) ein zweidimensionales Modell des Blechteils (20) in der durch die erste Richtung X und die zweite Richtung Y aufgespannten Ebene und
Integrieren der ermittelten oder eingegebenen Werkzeugdaten in das zweidimensionale Modell.

16. Verfahren nach einem der Ansprüche 9 bis 15, wobei beim Erzeugen des horizontalen Schnitts dieser Schnitt auf einer Höhe in der dritten Richtung Z erfolgt, die zwischen dem höchsten Punkt der Ausbuchtung (21) und derjenigen Seite des Blechstücks (20) liegt, auf welcher die Konvexität der Ausbuchtung ausgebildet ist.

## Claims

1. A system for automatically detecting three-dimensional shaping in a three-dimensional model of a sheet-metal part (20), comprising:
an input unit (100) for inputting data of a three-dimensional model of a sheet-metal part (20) which extends in a plane spanned by a first direction X and a second direction Y, wherein the sheet-metal part (20) comprises a bulge (21) in a third direction Z which is perpendicular to a plane spanned by the first direction X and the second direction Y;
a computing unit (200) adapted
to generate a horizontal cut with the three-dimensional model through the bulge (21) parallel to the plane spanned by the first direction X and the second direction Y, to obtain at least one closed two-dimensional horizontal cross-sectional contour of the bulge (21); as well as
to generate at least one vertical cut perpendicular to the plane spanned by the first direction X and the second direction Y of the sheet-metal part (20), to obtain a respective closed two-dimensional vertical cross-sectional contour of the bulge (21) for each vertical cut, which is composed of
a convex partial segment (S1),
a first partial cut segment (S2),
a concave partial segment (S3), and
a second partial cut segment (S4),
wherein the first partial cut segment (S2) and the second partial cut segment (S4) each extend between a first side of the sheet-metal (20) and an opposing second side thereof, and
wherein the computing unit (200) is further adapted to subject the at least one horizontal and the vertical cross-sectional contour to a transformation so as to determine specific transformation coefficients (F1, F2) of the at least one horizontal and the vertical cross-sectional contour;
at least one storage unit (300) in which an allocation table is stored, which allocates tool data to the transformation coefficients (F1, F2), wherein the tool data indicates a type of tool, and wherein the computing unit (200) can access to the storage unit to determine the tool data by the determined transformation coefficients; and
at least one output unit for outputting the data of the three-dimensional model together with tool data.

2. The system according to claim 1, wherein the transformation is a Fourier transformation, in particular a discrete Fourier transformation, and the transformation coefficients are Fourier coefficients.

3. The system according to claim 1 or 2, wherein
the computing unit (200) is adapted to obtain by the horizontal cut two closed two-dimensional horizontal cross-sectional contours of the bulge (21), and
the computing unit (200) is adapted to subject the first as well as the second vertical cross-sectional contour to a transformation to obtain specific transformation coefficients.

4. The system according to one of claims 1 to 3, wherein the first partial cut segment (S2) and the second partial cut segment (S4) extend perpendicular to the plane spanned by the first direction X and the second direction Y.

5. The system according to one of claims 1 to 4, wherein the first partial cut segment (S2) and the second partial cut segment (S4) extend at respective positions in the first direction X and the second direction Y, at which the bulge begins or ends, respectively.

6. The system according to one of claims 1 to 5, wherein the computing unit (200) is adapted to produce a further vertical cut, which is different from the mentioned vertical cut, and to subject the further vertical cross-sectional contour of the bulge (21), which results from the further vertical cut, to a Fourier transformation so as to determine specific Fourier coefficients (F3) of the further vertical cross-sectional contour.

7. The system according to one of claims 1 to 6, wherein the computing unit (300) is adapted to produce a two-dimensional model of the sheet-metal part (20) in the plane spanned by the first direction X and the second direction Y from the data of the three-dimensional model of the sheet-metal part (20) and to integrate the determined or input tool data into the two-dimensional model.

8. The system according to one of the preceding claims, wherein the horizontal cut is formed at a height in the third direction Z which is located between the highest point of the bulge (21) and that side of the sheet-metal part (20), on which the convexity of the bulge is formed.

9. A method for automatically detecting three-dimensional shaping in a three-dimensional model of a sheet-metal part (20), which comprises the following steps:
acquiring data of a three-dimensional model of a sheet-metal part (200) which extends in a plane spanned by a first direction X and a second direction Y, wherein the sheet-metal part (20) comprises a bulge (21) in a third direction Z which is perpendicular to the plane spanned by the first direction X and the second direction Y;
generating a horizontal cut with the three-dimensional model through the bulge (21) parallel to the plane spanned by the first direction X and the second direction Y, to obtain at least one closed two-dimensional horizontal cross-sectional contour of the bulge (21); as well as
generating at least one vertical cut perpendicular to the plane spanned by the first direction X and the second direction Y of the sheet-metal part (20), to obtain a respective closed two-dimensional vertical cross-sectional contour of the bulge (21) for each vertical cut, which is composed of
a convex partial segment (S1),
a first partial cut segment (S2),
a concave partial segment (S3), and
a second partial cut segment (S4),
wherein the first partial cut segment (S2) and the second partial cut segment (S4) each extend between a first side of the sheet-metal (20) and an opposing second side thereof,
applying a transformation to the at least one horizontal cross-sectional contour and the vertical cross-sectional contour, to determine specific Fourier coefficients (F1, F2) of the at least one horizontal and the vertical cross-sectional contours;
storing an allocation table which allocates tool data to the Fourier coefficients (F1, F2), wherein the tool data indicate a type of tool; and
outputting the data of the three-dimensional model together with the tool data.

10. The method according to claim 9, wherein the transformation is a Fourier transformation, in particular a discrete Fourier transformation, and the transformation coefficients are Fourier coefficients.

11. The method according to one of claims 9 or 10, wherein
two closed two-dimensional horizontal cross-sectional contours of the bulge (21) are obtained during generation of the horizontal cuts, and
upon application of the transformation, the transformation is applied to the first as well as to the second vertical cross-sectional contour to obtain specific transformation coefficients for the first as well as the second horizontal cross-sectional contour.

12. The method according to one of claims 9 to 11, wherein during the generation of the vertical cut the first partial cut segment (S2) and the second partial cut segment (S4) extend perpendicular to the plane spanned by the first direction X and the second direction Y.

13. The method according to one of claims 9 to 12, wherein during generation of the vertical cut the first partial cut segment (S2) and the second partial cut segment (S4) extend at respective positions in the first direction X and the second direction Y, at which the bulge begins or ends, respectively.

14. The method according to one of claims 9 to 13, further comprising the steps:
generating a further vertical cut, which differs from the mentioned vertical cut, and
applying a Fourier transformation to the further vertical cross-sectional contour of the bulge (21) generated by the further vertical step, to determine a specific Fourier coefficient (F3) of the further vertical cross-sectional contour.

15. The method according to one of claims 9 to 14, further comprising the step:
generating from the data of the three-dimensional model of the sheet-metal part (200) a two-dimensional model of the sheet-metal part (20) in the plane spanned by the first direction X and the second direction Y and
integrating the determined or input tool data into the two-dimensional model.

16. The method according to one of claims 9 to 14, wherein during generation of the horizontal cut this step is performed at a height in the third direction Z, which is located between the highest point of the bulge (21) and that side of the sheet-metal part (20), on which the convexity of the bulge is formed.

## Revendications

1. Système permettant de reconnaître automatiquement des déformations tridimensionnelles dans un modèle tridimensionnel d'une pièce en tôle (20) comprenant :
une unité d'entrée (100) pour permettre d'introduire des données d'un modèle tridimensionnel d'une pièce en tôle (20) qui s'étend dans un plan défini par une première direction X et une seconde direction Y, la pièce de tôle (20) comprenant un emboutissage (21) dans une troisième direction Z perpendiculaire au plan défini par la première direction X et la seconde direction Y,
une unité de calcul (200) réalisée,
pour permettre de créer une coupe horizontale avec le modèle tridimensionnel au travers de l'emboutissage (21) parallèlement au plan défini par la première direction X et la seconde direction Y pour permettre d'obtenir au moins un contour de section horizontale bidimensionnel fermé de l'emboutissage (21),
ainsi que pour permettre de créer au moins une coupe verticale perpendiculaire au plan de la pièce en tôle (20) défini par la première direction X et la seconde direction Z pour permettre d'obtenir respectivement un contour de section verticale bidimensionnel fermé de l'emboutissage (21) pour chaque coupe verticale, qui est composée de l'assemblage,
- d'un segment partiel convexe (S1),
- d'un premier segment partiel de coupe (S2),
- d'un segment partiel concave (S3), et
- d'un second segment partiel de coupe (S4),
- le premier segment partiel de coupe (S2) et le second segment partiel de coupe (S4) s'étendant respectivement entre une première face de la tôle (20) et la seconde face de celle-ci opposée à la première face, et
- l'unité de calcul (200) étant en outre réalisée pour permettre de soumettre le contour de section horizontale et le contour de section verticale a une transformation pour déterminer des coefficients de transformation spécifique (F1, F2) du contour de section horizontale et du contour de section verticale,
- au moins une unité de mémoire (300) dans laquelle est enregistré un tableau d'association qui associe des données d'outil aux coefficients de transformation (F1, F2), les données d'outil indiquant un type d'outil et l'unité de calcul (200) pouvant accéder à l'unité de mémoire pour déterminer les données d'outil par l'intermédiaire des coefficients de transformation déterminés, et
- au moins une unité de sortie pour fournir en sortie les données du modèle tridimensionnel avec les données d'outil.

2. Système conforme à la revendication 1,
dans lequel la transformation est une transformation de Fourier, en particulier une transformation de Fourier discrète et les coefficients de transformation sont des coefficients de Fourier.

3. Système conforme à l'une des revendications 1 et 2, dans lequel l'unité de calcul (200) est conçue de manière à permettre d'obtenir par l'intermédiaire de la coupe horizontale deux contours de section horizontale bidimensionnels fermés de l'emboutissage (21), et
pour permettre de soumettre le premier contour de section horizontale et le second contour de section horizontale à la transformation pour permettre d'obtenir des coefficients de transformation spécifiques.

4. Système conforme à l'une des revendications 1 à 3,
dans lequel le premier segment partiel de coupe (S2) et le second segment partiel de coupe (S4) s'étendent perpendiculairement au plan défini par la première direction X et la seconde direction Y.

5. Système conforme à l'une des revendications 1 à 4,
dans lequel le premier segment partiel de coupe (S2) et le second segment partiel de coupe (S4) s'étendent respectivement dans la première direction X et dans la seconde direction Y dans des positions pour lesquelles l'emboutissage commence ou se termine.

6. Système conforme à l'une des revendications 1 à 5,
dans lequel l'unité de calcul (200) est conçue pour permettre de créer une autre coupe verticale qui est différente de la coupe verticale susmentionnée, et de soumettre l'autre contour de section verticale de l'emboutissage (21) résultant de l'autre coupe verticale à une transformation de Fourier pour déterminer un coefficient de Fourier spécifique (F3) de l'autre contour de section verticale.

7. Système conforme à l'une des revendications 1 à 6,
dans lequel l'unité de calcul (300) est conçue pour permettre de créer, à partir des données du modèle tridimensionnel de la pièce en tôle (20), un modèle bidimensionnel de cette pièce en tôle (20) dans le plan défini par la première direction X et la seconde direction Y et d'intégrer dans ce modèle bidimensionnel les données d'outil déterminées ou introduites.

8. Système conforme à l'une des revendications précédentes, dans lequel la coupe horizontale est effectuée à une hauteur dans la troisième direction Z qui est située entre le point le plus haut de l'emboutissage (21) et la face de la pièce en tôle (20) sur laquelle est formé la convexité de l'emboutissage.

9. Procédé permettant de reconnaitre automatiquement des déformations tridimensionnelle dans un modèle tridimensionnel d'une pièce en tôle (20) comprenant les étapes suivantes consistant à :
détecter des données d'un modèle tridimensionnel d'une pièce en tôle (20) qui s'étend dans un plan défini par une première direction X et une seconde direction Y, cette pièce en tôle (20) ayant un emboutissage (21) dans une troisième direction Z qui est perpendiculaire au plan défini par la première direction X et la seconde direction Y,
créer une coupe horizontale avec le modèle tridimensionnel au travers de l'emboutissage (21) parallèlement au plan défini par la première direction X et la seconde direction Y pour obtenir au moins un contour de section horizontale bidimensionnel fermé de l'emboutissage (21), et créer au moins une coupe verticale perpendiculaire au plan de la pièce en tôle (20) défini par la première direction X et la seconde direction Y pour permettre d'obtenir respectivement pour chaque coupe verticale un contour de section verticale bidimensionnel fermé de l'emboutissage (21), qui est constituée par l'assemblage,
- d'un segment partiel convexe (S1),
- d'un premier segment partiel de coupe (S2),
- d'un segment partiel concave (S3), et
- d'un second segment partiel de coupe (S4),
le premier segment partiel de coupe (S2) et le second segment partiel de coupe (S4) s'étendant respectivement entre une première face de la tôle (20) et la seconde face de celle-ci située à l'opposé de cette première face,
- utiliser une transformation sur le contour de section horizontale et le contour de section verticale pour déterminer des coefficients de Fourier spécifiques (F1, F2) du contour de section horizontale et du contour de section verticale,
- enregistrer un tableau d'association qui associe des données d'outil aux coefficients de Fourier (F1, F2), les données d'outil indiquant un type d'outil, et
- délivrer en sortie les données du modèle tridimensionnel avec les données d'outil.

10. Procédé conforme à la revendication 9,
selon lequel la transformation est une transformation de Fourier, en particulier une transformation de Fourier discrète et les coefficients de transformation sont des coefficients de Fourier.

11. Procédé conforme à l'une des revendications 9 et 10,
selon lequel :
lors de l'étape consistant à créer la coupe horizontale, on obtient deux contours de section horizontale bidimensionnels fermés de l'emboutissage (21), et
lors de l'étape consistant à utiliser la transformation, on utilise la transformation du premier contour de section horizontale et du second contour de section horizontale pour obtenir des coefficients de transformation spécifique pour le premier contour de section horizontale et également pour le second contour de section horizontale.

12. Procédé conforme à l'une des revendications 9 à 11,
selon lequel lors de la création de la coupe verticale, le premier segment partiel de coupe (S2) et le second segment partiel de coupe (S4) s'étendent perpendiculairement au plan défini par la première direction X et par la seconde direction Y.

13. Procédé conforme à l'une des revendications 9 à 12,
selon lequel lors de l'étape consistant à créer la coupe verticale, le premier segment partiel de coupe (S2) et le second segment partiel de coupe (S4) s'étendent respectivement dans la première direction X et dans la seconde direction Y dans des positions pour lesquelles l'emboutissage commence ou se termine.

14. Procédé conforme à l'une des revendications 9 à 13,
comprenant en outre des étapes consistant à :
créer une autre coupe verticale qui est différente de la coupe verticale susmentionnée, et
utiliser une transformation de Fourier sur l'autre contour de section verticale de l'emboutissage (21) résultant de l'autre coupe verticale pour déterminer un coefficient de Fourier spécifique (F3) de l'autre contour de section verticale.

15. Procédé conforme à l'une des revendications 9 à 14,
comprenant en outre des étapes consistant à :
créer à partir des données du modèle tridimensionnel de la pièce en tôle (20) un modèle bidimensionnel de cette pièce en tôle (20) dans le plan défini par la première direction X et la seconde direction Y, et
intégrer les données d'outil déterminées ou introduites dans le modèle bidimensionnel.

16. Procédé conforme à l'une des revendications 9 à 15,
selon lequel lors de l'étape consistant à créer la coupe horizontale, cette coupe est effectuée à une hauteur dans la troisième direction Z qui est située entre le point le plus haut de l'emboutissage (21) et la face de la pièce en tôle (20) sur laquelle est formée la convexité de l'emboutissage.
